(19) **Europäisches Patentamt**
**European Patent Office**
**Office européen des brevets**

(11) **EP 0 817 953 B1**

(12) **EUROPÄISCHE PATENTSCHRIFT**

(45) Veröffentlichungstag und Bekanntmachung des Hinweises auf die Patenterteilung:
**13.06.2001   Patentblatt 2001/24**

(51) Int Cl.⁷: **G01D 3/08**, G01D 5/244

(21) Anmeldenummer: **96907275.0**

(86) Internationale Anmeldenummer:
**PCT/DE96/00520**

(22) Anmeldetag: **25.03.1996**

(87) Internationale Veröffentlichungsnummer:
**WO 96/30723 (03.10.1996 Gazette 1996/44)**

(54) **VORRICHTUNG ZUR DREHRICHTUNGSERKENNUNG UND PLAUSIBILITÄTSPRÜFUNG BEI ABSOLUTEN WINKELLAGEMESSGEBERN MIT INSBESONDERE SERIELLER ÜBERTRAGUNG ERFASSTER LAGEISTWERTE**

DEVICE FOR DIRECTION OF ROTATION RECOGNITION AND PLAUSIBILITY TESTING IN ABSOLUTE ANGULAR POSITION MEASURING DEVICES ESPECIALLY WITH SERIAL TRANSMISSION OF ACTUAL POSITIONS DETECTED

APPAREIL A DETERMINER LE SENS DE ROTATION ET A CONTROLER LA VRAISEMBLANCE, UTILISE DANS LES CAPTEURS DE LA POSITION ANGULAIRE ABSOLUE, AVEC NOTAMMENT LA TRANSMISSION EN SERIE DES POSITIONS REELLES DETECTEES

(84) Benannte Vertragsstaaten:
**AT CH DE ES FR GB LI**

(30) Priorität: **30.03.1995   DE 29505426 U**

(43) Veröffentlichungstag der Anmeldung:
**14.01.1998   Patentblatt 1998/03**

(73) Patentinhaber: **SIEMENS AKTIENGESELLSCHAFT**
**80333 München (DE)**

(72) Erfinder: **STREICHERT, Gerhard**
**D-92353 Postbauer-Heng (DE)**

(56) Entgegenhaltungen:
**EP-A- 0 479 525**

• **PATENT ABSTRACTS OF JAPAN vol. 018, no. 654 (P-1841), 12.Dezember 1994 & JP,A,06 258098 (MATSUSHITA ELECTRIC IND CO LTD), 16.September 1994,**

EP 0 817 953 B1

**Beschreibung**

Bei absoluten Winkellagemeßgebern können Lageistwerte in binärer Form in vorgegebenen Zeitabständen bevorzugt seriell z.B. an eine Steuerung zur Weiterverarbeitung übertragen werden. Da der Vorgang der seriellen Datenübertragung aller Bits eines derartigen, binärcodierten Istwertes aber eine gewisse Dauer beansprucht, kann sich während dessen der reale Istwert in Ausnahmefällen stark verändern.

Ein erster derartiger Fall ist gegeben, wenn die Welle des absoluten Winkellagemeßgebers z.B. wegen einer an sich unzulässigen Überdrehzahl vorübergehend mit einer hohen Drehzahl rotiert. Dabei kann sich zwischen Beginn und Ende der seriellen, bitweisen Übertragung eines vorher erfaßten Lageistwertes die tatsächliche Lage der Welle um viele Wegeinheiten verändern. Der darauf folgende, seriell übertragene Lageistwert weist dann einen unerwartet sprunghaft veränderten Betrag auf. Ein weiterer derartiger Fall ist gegeben, wenn Fehler bei der seriellen Datenübertragung auftreten. Dabei können z.B. durch elektromagnetische Einstrahlungen verursacht hochwertige Bits der Codierung des Lageistwertes im seriellen Datenstrom verfälscht werden. Auch in diesem Fall können Lageistwerte einen dann fehlerbedingt sprunghaft veränderten Betrag aufweisen. Werden derartige sprunghafte Änderungen eines Winkellageistwertes z.B. einer Steuerung zugeführt, so wird dort sowohl die Erkennung der Drehrichtung der Welle des Winkellagemeßgebers, als auch die Plausibilitätsprüfung der eingehenden Lageistwerte erschwert.

Im Normalbetrieb kann die Drehrichtung der Welle des Winkellagemeßgebers auf einfache Weise ermittelt werden, indem die Differenz von aufeinander folgenden Istwerten gebildet wird. Ist das Vorzeichen von " aktueller Lageistwert - vorangegangener Lageistwert " positiv, so wird beispielsweise "vorwärts" gedreht, tritt dabei ein negatives Vorzeichen auf, so wird "rückwärts" gedreht. Voraussetzung für die Funktionsfähigkeit dieser Methode ist aber, daß die beiden Istwerte in obiger Differenz immer so eng beieinander liegen, daß eine derartiges Paar in jedem Fall entweder "vor" oder "nach" dem sogenannten Nullpunkt der Welle des Winkellagegebers liegt. Die Beträge der beiden Istwerte dürfen somit in der Regel nicht stark voneinander abweichen.

Dies bedeutet aber wiederum, daß die Rotationsgeschwindigkeit der Welle des Winkellagemeßgebers und die Schnelligkeit der seriellen Datenübertragung immer so aufeinander abgestimmt sein müssen, daß nicht einer der beiden Werte des Paares "vor" und der andere Wert "nach" Überschreitung des Nullpunktes erfaßt wird. In einem solchen Fall würde eine fehlerhafte Drehrichtung bestimmt werden. Ist der alte, "vor" dem Nullpunkt liegende Istwert beispielsweise 3550 ( entspricht z.B. einem Lageistwert 355,0 Grad ), der neue, "nach" dem Nullpunkt liegende Istwert 50 ( entspricht z.

B. einem Lageistwert 5,0 Grad ), so ergibt die Differenz " aktueller Lageistwert - vorangegangener Lageistwert " , d.h. im Beispiel 50 - 3550, ein negatives Vorzeichen, obwohl die Welle des Winkellagemeßgebers vorwärts über den Nullpunkt hinweg gedreht wurde. Andererseits dürfen zur Differenzbildung auch nicht durch elektromagnetische Einstrahlungen betragsmäßig stark verfälschte Lageistwerte verwendet werden. Auch in diesem Fall besteht die Gefahr, daß eine fehlerhafte Drehrichtung bestimmt wird.

Unerwartet oder fehlerbedingt stark veränderte Lageistwerte stellen auch dann ein Problem dar, wenn dieses z.B. in einer Steuerung auf sogenannte Plausibilität überprüft werden. Hierzu wird meist angenommen, daß die Änderung von eingehenden Lageistwerten in einer annähernd quasikontinuierlichen Weise erfolgt. Dann kann überprüft werden, ob deren Betrag eine vorgegebene, maximal zulässige Änderungsgeschwindigkeit nicht überschreitet. Hiermit können z.B. aufgrund von Fehlern bei der seriellen Datenübertragung verfälschte, unbrauchbare Lageistwerte ausgefiltert werden. Andererseits können derartige große Istwertsprünge unerwartet auch dann auftreten, wenn die Abstimmung zwischen der Geschwindigkeit der seriellen Datenübertragung und der Rotationsgeschwindigkeit der Welle des Winkellagemeßgebers z.B. durch eine vorübergehende an sich unzulässige Überdrehzahl gestört ist. Derartige große, fehlerhafte oder unerwartete Istwertsprünge sind dann verwechselbar mit zulässigen Istwertsprüngen, welche bei der Winkellageerfassung immer auftreten.

Bei der Erfassung der Lage der Welle eines Winkellagegebers ändert sich nämlich der Istwert vom Maximalwert auf den Start- bzw. Nullwert oder umgekehrt im Moment der Überfahrung des sogenannten Nullpunktes. Bei einem Geber mit z.B. einer sogenannten 0,1 ° Auflösung einer vollen Umdrehung der überwachten Welle ändert sich die binäre Codierung des Istwertes bei Überfahrung des Nullpunktes von einem Maximalwert 3599 ( entspricht z.B. einem Lageistwert 359,9 Grad ) auf 0 ( entspricht z.B. einem Lageistwert von 0 Grad ). Derartige Betragssprünge im Lageistwert sind nur im Moment der Nullpunktsüberschreitung zulässig und müssen als solche erkannt werden. Treten aber, wie oben beschrieben, sporadisch unerwartete oder fehlerbedingte große Betragssprünge auf, so wird hierdurch z.B. in einer auswertenden Steuerung sowohl die Erkennung der Drehrichtung der Welle, als auch die Plausibilitätsprüfung eingehender Lageistwerte behindert.

Der Erfindung liegt die Aufgabe zugrunde eine Schaltung anzugeben, womit bei einem absoluten Winkellagegeber trotz eines möglichen Auftretens von großen Betragsänderungen bei den erfaßten Winkellageistwerten die Drehrichtung der Welle des Winkellagegebers korrekt ermittelt und die Plausibilität der Lageistwerte überprüfen werden kann.

Das Dokument EP 0 479 525 A2 offenbart einen Absolutwinkellagemeßgeber. Bei Stromausfall der externen Spannungsversorgung wird diese durch eine interne Spannungsversorgung gepuffert. Der absolute Winkel eines rotierenden Elements wird dabei auf der Basis der Ausgangssignale von zwei im Winkel von 90 Grad zueinander angeordneten Detektierspulen berechnet. Die Rotationsrichtung wird durch Vergleich der beiden Ausgangssignale der Detektierspulen berechnet. Beim Übergang des einen Ausgangssignals von 'low' nach 'high' wird der Status des zweiten Ausgangssignals überprüft. In Abhängigkeit davon, ob dieser 'low' oder 'high' ist, liegt eine positive oder negative Drehbewegung vor.

Das Dokument JP-A-6 258 098 betrifft einen absoluten Winkellagemeßgeber. Dabei wird der zunächst binär vorliegende Winkelabsolutwert seriell ausgegeben. Zur Winkelmessung dienen insbesondere ein Einfach-Umdrehungszähler und ein Mehrfach-Umdrehungszähler.

Die Aufgabe wird gelöst mit der im Anspruch 1 angegebenen Schaltung. Vorteilhafte weitere Ausgestaltungen derselben sind in den Unteransprüchen angegeben.

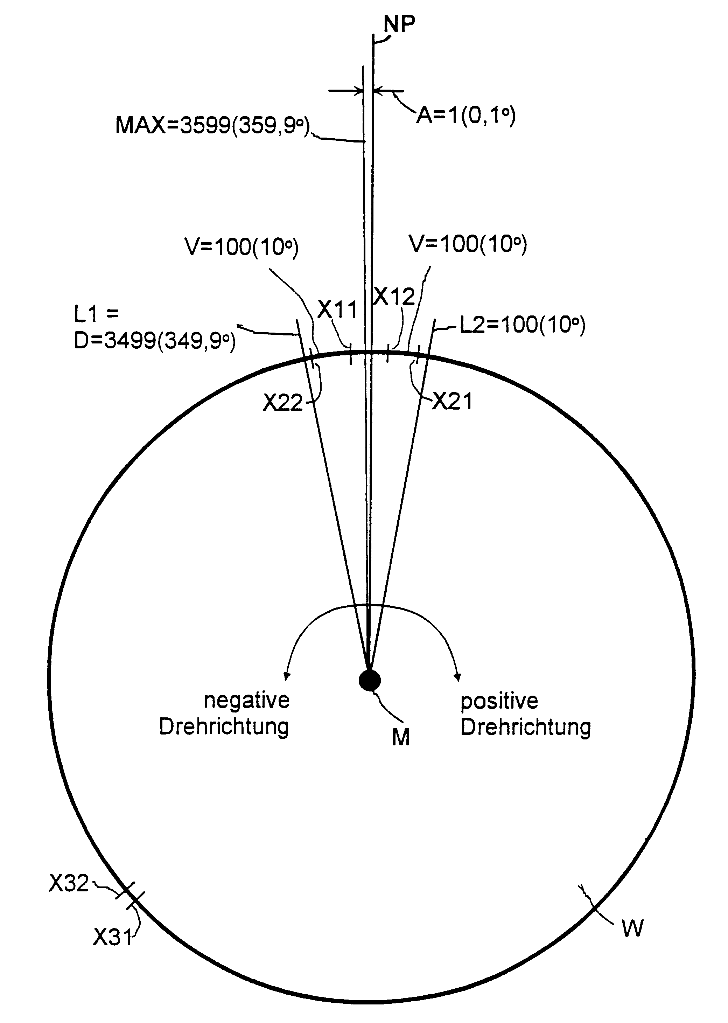

Die Erfindung wird mit Hilfe der beiliegenden Figur, welche einen Querschnitt durch die Welle eines Winkellagegebers zeigt, weiter erläutert.

Von der erfindungsgemäßen Schaltung wird z. B. bei der Inbetriebsetzung des Winkellagemeßgebers zunächst ein erster Wert V ermittelt und in einem Speicher hinterlegt. Dieser entspricht der Anzahl an Winkeleinheiten, die während zwei aufeinander folgender Übertragungen von Lageistwerten über die jeweilige serielle Datenübertragungsstrecke bei Vorliegen der maximal zulässigen Drehzahl der Welle des Winkellagemeßgebers zurückgelegt wird. Dieser Wert ist somit ein Maß für die Leistungsfähigkeit der jeweils eingesetzten seriellen Datenübertragungseinrichtung relativ zur größtmöglichen Änderungsgeschwindigkeit der zu erfassenden und zu übertragenden Lageistwerte, und entspricht dem größtmöglichen Winkelabstand zwischen zwei aufeinander folgend erfaßten und übertragenen Lageistwerten. Da im Normalfall die Drehzahl der Welle kleiner als der Maximalwert sein wird, liegen üblicherweise Lageistwerte näher beieinander. Der Wert repräsentiert folglich zum einen die aktuelle Erfassungsgeschwindigkeit aufeinander folgender Lageistwerte, und zum anderen aber auch den dabei möglichen Maximalwert der Stufenhöhe im Betrag der Istwerten.

Von der erfindungsgemäßen Schaltung wird ferner ein zweiter Wert D ermittelt und gegebenenfalls gemeinsam mit dem ersten Wert V ebenfalls im Speicher hinterlegt. Dieser entspricht der Differenz aus dem maximalen Wegwert MAX des Winkellagemeßgebers und dem ersten Wert V, d.h. D = ( MAX - V ). Dieser Wert entspricht somit dem Lagewert der Welle des Winkellagegebers, dessen Erfassung und serielle Übertragung z.B. an eine Steuerung bei Vorliegen der maximalen Drehgeschwindigkeit der Welle genau soviel Zeit beanspruchen würde, daß der darauf folgend erfaßte Lageistwert mit dem sogenannten Drehgeberendwert MAX zusammenfällt. Dieser Drehgeberendwert ist der Lageistwert, dem auch abhängig von jeweiligen binären Codierung der maximal vorkommende Betragswert zugeordnet wird. Er liegt in der Regel nur um den der Auflösung des Winkellagegebers entsprechenden Winkelwert vor dem sogenannten Nullpunkt des Gebers.

Bei dem in der Figur gezeichneten Beispiel sei in der gleichen Weise wie bereits oben angenommen, daß der Winkellagegeber Lageänderungen seiner Welle W mit einer Auflösung von 0,1 ° erfassen kann. Diesem kleinsten, meßbaren Winkelbereich wird dann vorteilhaft der kleinste Betragswert A = 1 zugeordnet. Bei einer Auflösung von 0,1 ° weist der maximal erfaßbare Lageistwert die Größe von 359,9 Grad. Diesem unmittelbar vor dem Nullpunkt NP der Welle W liegenden Endwert des Winkellagemeßgebers wird dann der maximale Betragswert von MAX = 3599 zugeordnet. Ferner sei angenommen, daß sich die Welle W des Winkellagemeßgebers bei Vorliegen der maximal zulässigen Drehzahl zwischen Erfassung und Übertragung von zwei aufeinander folgenden Lageistwerten um einen Winkelbereich von 10 ° weiter dreht. In diesem Fall ergibt sich für den ersten Wert V ( V = 10 ° dividiert durch 0,1 ° ) die Größe 100 und für den zweiten Wert D = MAX minus V = 3599 - 100 = 3499. In der Figur sind rechts und links des Nullpunktes NP der Welle W die Lageistwerte L1 und L2 dargestellt. Der Lageistwert L1 = 3499 liegt dabei um die Größe des ersten Wertes V (100) zuzüglich der Auflösung A (1), d.h. genau um die Größe des zweiten Wertes D "vor" dem Nullpunkt NP. Der zweite Lageistwert L2 = 100 liegt um die Größe des ersten Wertes V (100) "nach" dem Nullpunkt.

Die erfindungsgemäße Schaltung kann nun über eine Verarbeitungseinheit mit Hilfe der beiden Werte V und D ermitteln, ob sich ein aktuell erfaßter Lageistwert und der dazugehörige, im unmittelbar vorangegangenen Zyklus erfaßte, übertragene und somit bereits im Speicher befindliche Lageistwert unmittelbar links oder rechts vom Nullpunkt NP befindet, und somit der Fall eingetreten ist, daß sich die zur Drehrichtungserkennung miteinander in Verbindung zu bringenden Lageistwerte ausnahmsweise nicht beide gemeinsam auf einer Seite des Nullpunktes befinden. Hierzu werden die Istwerte mit Hilfe von Vergleichsmitteln der erfindungsgemäßen Schaltung mit den jeweiligen Größen der beiden gespeicherten Werte V und D verglichen.

Die Erfindung wird mit Hilfe der Figur am Beispiel von drei Paaren zusammengehöriger Lageistwerte X11,X12 und X21,X22 und X31,X32 erläutert, wobei die Werte Xx2 den jeweils aktuellen, neu erfaßten und übertragenen Lageistwert, und die Werte Xx1 den jeweils vorangegangenen, im vorherigen Zyklus erfaßten Lageistwert darstellen, wobei für x=1,2,3 gilt.

Ergibt dieser Vergleich in einem ersten Fall, daß ein aktueller Lageistwert X12 im Bereich zwischen dem Nullpunkt NP und dem mit der Größe des ersten gespeicherten Wertes V übereinstimmenden Lageistwert L2 liegt, d.h. in der Figur rechts vom Nullpunkt, und zusätzlich der vorangegangene Lageistwert X11 im Bereich zwischen dem mit der Größe des zweiten gespeicherten Wertes D übereinstimmenden Lageistwert L1 und dem Drehgeberendwert MAX liegt, d.h. in der Figur links vom Nullpunkt, sind also die folgenden Bedingungen erfüllt

$$NP < X12 < V \qquad (Gl. 1)$$

$$D < X11 < MAX \qquad (Gl. 2),$$

so ermittelt die erfindungsgemäße Schaltung eine positive Drehrichtung.

Ergibt dieser Vergleich in einem zweiten Fall, daß ein aktueller Lageistwert X22 im Bereich zwischen dem mit der Größe des zweiten gespeicherten Wertes D übereinstimmenden Lageistwert L1 und dem Drehgeberendwert MAX liegt, d.h. in der Figur links vom Nullpunkt, und zusätzlich der vorangegangener Lageistwert X21 im Bereich zwischen dem Nullpunkt NP und dem mit der Größe des ersten gespeicherten Wertes V übereinstimmenden Lageistwert L2 liegt, d.h. in der Figur rechts vom Nullpunkt, sind also die folgenden Bedingungen erfüllt

$$D < X22 < MAX \qquad (Gl. 3)$$

$$NP < X21 < V \qquad (Gl. 4),$$

so ermittelt die erfindungsgemäße Schaltung eine negative Drehrichtung.

Ist eine der beiden Bedingungen in einem der obigen Gleichungspaare Gl.1, Gl.2 oder G.3, Gl.4 erfüllt, so wurde der Nullpunkt NP der Welle W des Winkellagemeßgebers überschritten, und die beiden zur Erfassung der aktuellen Drehrichtung miteinander zu verarbeitenden Werte liegen nicht paarig beisammen auf einer Seite des Nullpunktes NP.

Ergibt dieser Vergleich in einem dritten Fall, daß keine der Bedingungen der obigen Gleichungen Gl. 1 bis Gl.4 erfüllt ist, so liegen beide Lageistwerte nicht nahe bei dem bzw. um den Nullpunkt NP. In der Figur ist ein Paar derartiger Lageistwerte X32, X31 eingezeichnet. Es wird dann die Differenz zwischen dem aktuellen Lageistwert X32 und dem vorangegangenen Lageistwert X31 wie bisher gebildet. Ist das Vorzeichen dieser Differenz positiv, so ist die Drehrichtung positiv, andernfalls negativ. Im Beispiel der Figur ist die Drehrichtung positiv.

Die Erfindung hat den Vorteil, daß trotz des möglichen Auftretens von unerwarteten oder fehlerbedingten großen Betragsänderungen bei den erfaßten Winkellageistwerten die Drehrichtung der Welle des Winkellagegebers in jedem Fall korrekt ermittelt werden kann. Die Erfindung hat den zusätzlichen Vorteil, daß sie auf einfache Weise um eine zusätzliche Plausibilitätsprüfung von erfaßten Lageistwerten erweiterbar ist.

Hierzu wird der Betrag aus der Differenz " aktueller Lageistwert - vorangegangener Lageistwert " gebildet. Ist dieser Betrag größer als der erste gespeicherte Wert V, so ist einer der beiden Istwerte fehlerhaft, da die Werte auf dem Umfang der Welle dann quasi zu weit auseinander liegen. Ein derartiger Betrag kann nur zustande kommen, wenn entweder die tatsächliche Drehzahl höher als die maximal zulässige ist, oder ein Lageistwert z.B. durch elektromagnetische Einstrahlungen bei der seriellen Datenübertragung verfälscht wurde. Tritt ein solches fehlerhaftes Paar von Lagewerten auf, so können diese nicht weiterverarbeitet werden, sondern müssen verworfen werden. Diese Ergänzung der Erfindung hat den Vorteil, daß die übertragenen Lageistwerte auch dann auf Plausibilität überprüfbar sind, wenn keine datensichernden Verfahren z.B. durch Hinzufügung redundanter Informationen wie Paritäts- oder Prüfsummenbits bei der seriellen Datenübertragung eingesetzt werden.

**Patentansprüche**

1. Schaltung zur Erfassung der Drehrichtung eines absoluten Winkellagemeßgebers, der die Lageistwerte über eine bevorzugt serielle Datenübertragungsstrecke zugeführt werden, mit

   a) einem Speicher, in dem hinterlegt sind

      a1) ein erster Wert (V), der den Winkeleinheiten entspricht, die während zwei aufeinanderfolgend übertragener Lageistwerte über die Datenübertragungsstrecke bei maximaler Drehzahl der Meßgeberwelle (W) zurückgelegt werden, und

      a2) ein zweiter Wert (D), welcher der Differenz aus dem maximalen Wegwert des Winkellagemeßgebers (MAX) und dem ersten Wert (V) entspricht (D = MAX - V), und mit

   b) einer Verarbeitungseinheit, welche die Drehrichtung der Welle (W) abhängig davon bestimmt, ob zwei aufeinanderfolgende übertragene Lageistwerte (X11,X12;X21,X22; X31,X32) im Bereich zwischen dem Nullpunkt (NP) des Winkellagegebers und einem mit der Größe des ersten gespeicherten Wertes (V) übereinstimmenden Lageistwert (L2), bzw. in dem Bereich zwischen einem mit der Größe des zweiten gespeicherten Wertes (D) übereinstimmenden Lageistwert (L1) und dem maximalen Wegwert (MAX), oder außerhalb davon liegen.

2. Schaltung nach Anspruch 1, wobei die Verarbeitungseinheit

   a) eine positive Drehrichtung detektiert, wenn

   a1) ein aktueller Lageistwert (X12) im Bereich zwischen dem Nullpunkt (NP) und einem mit der Größe des ersten Wertes (V) übereinstimmenden Lageistwert (L2) liegt, und

   a2) der vorangegangene Lageistwert (X11) im Bereich zwischen einem mit der Größe des zweiten gespeicherten Wertes (D) übereinstimmenden Lageistwert (L1) und dem maximalen Wegwert des Winkellagemeßgebers (MAX) liegt, und

   b) eine negative Drehrichtung detektiert, wenn

   b1) ein aktueller Lageistwert (X22) im Bereich zwischen einem mit der Größe des zweiten gespeicherten Wertes (D) übereinstimmenden Lageistwert (L1) und dem maximalen Wegwert des Winkellagemeßgebers (MAX) liegt, und

   b2) der vorangegangener Lageistwert (X21) im Bereich zwischen dem Nullpunkt (NP) und einem mit der Größe des ersten gespeicherten Wertes (V) übereinstimmenden Lageistwert (L2) liegt.

3. Schaltung nach Anspruch 1 oder 2, wobei die Verarbeitungseinheit die Drehrichtung durch Bildung einer Differenz aus den beiden aufeinander folgenden Lageistwerten (X11,X12;X21, X22;X31,X32) bildet, wenn keiner oder maximal einer der beiden Lageistwerte (X32,X31) entweder im Bereich zwischen einem mit der Größe des zweiten gespeicherten Wertes (D) übereinstimmenden Lageistwert (L1) und dem maximalen Wegwert des Winkellagemeßgebers (MAX) oder im Bereich zwischen dem Nullpunkt (NP) und einem mit der Größe des ersten gespeicherten Wertes (V) übereinstimmenden Lageistwert (L2) liegt.

4. Schaltung nach einem der vorangegangenen Ansprüche, wobei die Verarbeitungseinheit den Betrag aus einer Differenz der beiden Lageistwerte (X11,X12;X21,X22;X31,X32) bildet, und die Lageistwerte mangels Plausibilität verwirft, wenn der Wert des Betrags größer ist als der erste Wert (V).

**Claims**

1. Circuit for identifying the direction of rotation of an absolute angular position encoder, to which circuit the actual position values are fed via a prefer-ably serial data transmission link, having

   a) a store in which the following are stored

   a1) a first value (V) which corresponds to the angular units covered during two actual position values successively transmitted via the data transmission link at the maximum rotational speed of the encoder shaft (W), and
   a2) a second value (D), which corresponds to the difference between the maximum travel of the angular position encoder (MAX) and the first value (V) (D = MAX - V), and having

   b) a processing unit which determines the direction of rotation of the shaft (W) depending on whether two successively transmitted actual position values (X11, X12; X21, X22; X31, X32) lie in the range between the zero point (NP) of the angular position encoder and an actual position value (L2) corresponding to the magnitude of the first stored value (V), or in the range between an actual position value (L1) corresponding to the magnitude of the second stored value (D) and the maximum travel (MAX), or outside these ranges.

2. Circuit according to Claim 1, the processing unit

   a) detecting a positive direction of rotation if

   a1) a current actual position value (X12) lies in the range between the zero point (NP) and an actual position value (L2) corresponding to the magnitude of the first value (V), and
   a2) the previous actual position value (X11) lies in the range between an actual position value (L1) corresponding to the magnitude of the second stored value (D) and the maximum travel of the angular position encoder (MAX), and

   b) detecting a negative direction of rotation if

   b1) a current actual position value (X22) lies in the range between an actual position value (L1) corresponding to the magnitude of the second stored value (D) and the maximum travel of the angular position encoder (MAX), and

b2) the previous actual position value (X21) lies in the range between the zero point (NP) and an actual position value (L2) corresponding to the magnitude of the first stored value (V).

**3.** Circuit according to Claim 1 or 2, the processing unit forming the direction of rotation by forming a difference between the two successive actual position values (X11, X12; X21, X22; X31, X32) if none or a maximum of one of the two actual position values (X32, X31) lies either in the range between an actual position value (L1) corresponding to the magnitude of the second stored value (D) and the maximum travel of the angular position encoder (MAX) or in the range between the zero point (NP) and an actual position value (L2) corresponding to the magnitude of the first stored value (V).

**4.** Circuit according to one of the preceding claims, the processing unit forming the absolute magnitude of a difference between the two actual position values (X11, X12; X21, X22; X31, X32) and discarding the actual position values as lacking plausibility if the value of the absolute magnitude is greater than the first value (V).

**Revendications**

**1.** Circuit pour la détection du sens de rotation d'un capteur de position angulaire absolue auquel sont envoyées les valeurs réelles de position par l'intermédiaire d'une voie de transmission de données sérielle de préférence, comportant

a) une mémoire dans laquelle sont mémorisées

a1) une première valeur (V) qui correspond aux unités angulaires qui sont parcourues pendant deux valeurs réelles de position transmises successivement par l'intermédiaire de la voie de transmission de données si l'arbre de capteur (W) tourne à sa vitesse maximale, et

a2) une deuxième valeur (D) qui correspond à la différence entre la valeur de course maximale du capteur de position angulaire (MAX) et la première valeur (V) (D = MAX - V), et

b) une unité de traitement qui détermine le sens de rotation de l'arbre (W) selon que deux valeurs réelles de position successives transmises (X11, X12 ; X21, X22 ; X31, X32) se trouvent dans la zone entre le point zéro (NP) du capteur de position angulaire et une valeur de position réelle (L2) coïncidant avec la grandeur de la première valeur mémorisée (V) ou bien dans la zone entre une valeur de position réelle (L1) coïncidant avec la grandeur de la deuxième valeur mémorisée (D) et la valeur de course maximale (MAX), ou bien en dehors de ces zones.

**2.** Circuit selon la revendication 1, dans lequel l'unité de traitement

a) détecte un sens de rotation positif si

a1) une valeur réelle de position actuelle (X12) se trouve dans la zone entre le point zéro (NP) et une valeur réelle de position (L2) coïncidant avec la grandeur de la première valeur (V), et

a2) la valeur réelle de position précédente (X11) se trouve dans la zone entre une valeur réelle de position (L1) coïncidant avec la grandeur de la deuxième valeur mémorisée (D) et la valeur de course maximale du capteur de position angulaire (MAX), et

b) détecte un sens de rotation négatif si

b1) une valeur réelle de position actuelle (X22) se trouve dans la zone entre une valeur réelle de position (L1) coïncidant avec la grandeur de la deuxième valeur mémorisée (D) et la valeur de course maximale du capteur de position angulaire (MAX), et

b2) la valeur réelle de position précédente (X21) se trouve dans la zone entre le point zéro (NP) et une valeur réelle de position (L2) coïncidant avec la grandeur de la première valeur mémorisée (V).

**3.** Circuit selon la revendication 1 ou 2, dans lequel l'unité de traitement forme le sens de rotation en formant une différence entre les deux valeurs réelles de position successives (X11, X12 ; X21, X22 ; X31, X32) si aucune ou au maximum une des deux valeurs réelles de position (X32, X31) se trouve soit dans la zone entre une valeur réelle de position (L1) coïncidant avec la grandeur de la deuxième valeur mémorisée (D) et la valeur de course maximale du capteur de position angulaire (MAX) soit dans la zone entre le point zéro (NP) et une valeur réelle de position (L2) coïncidant avec la grandeur de la première valeur mémorisée (V).

**4.** Circuit selon l'une des revendications précédentes, dans lequel l'unité de traitement forme la valeur absolue à partir d'une différence entre les deux valeurs réelles de position (X11, X12 ; X21, X22 ; X31, X32) et rejette les valeurs réelles de position par manque de vraisemblance si la valeur de la valeur absolue est supérieure à la première valeur (V).

NP

A=1(0,1°)

MAX=3599(359,9°)

V=100(10°)  V=100(10°)

L1 =
D=3499(349,9°)

X11 X12

L2=100(10°)

X22  X21

negative
Drehrichtung

positive
Drehrichtung

M

X32

X31

W